Europäisches Patentamt

European Patent Office

Office européen des brevets

(11) Numéro de publication : **0 327 450 B1**

## (12) FASCICULE DE BREVET EUROPEEN

(45) Date de publication du fascicule du brevet :
22.04.92 Bulletin 92/17

(51) Int. Cl.$^5$ : **B62D 5/06**

(21) Numéro de dépôt : **89400277.3**

(22) Date de dépôt : **01.02.89**

(54) **Direction assistée à assistance variable.**

(30) Priorité : **02.02.88 FR 8801542**

(43) Date de publication de la demande :
**09.08.89 Bulletin 89/32**

(45) Mention de la délivrance du brevet :
**22.04.92 Bulletin 92/17**

(84) Etats contractants désignés :
**DE GB IT**

(56) Documents cités :
**FR-A- 2 216 162**
**FR-A- 2 394 437**
**US-A- 4 481 866**

(73) Titulaire : **AUTOMOBILES PEUGEOT**
**75, avenue de la Grande Armée**
**F-75116 Paris (FR)**
Titulaire : **AUTOMOBILES CITROEN**
**62 Boulevard Victor-Hugo**
**F-92200 Neuilly-sur-Seine (FR)**

(72) Inventeur : **Camus, Gérard**
**15, rue des Bouchères**
**F-95240 Cormeilles-en-Parisis (FR)**

(74) Mandataire : **Boivin, Claude**
**9, rue Edouard-Charton**
**F-78000 Versailles (FR)**

Jouve, 18, rue Saint-Denis, 75001 PARIS

## Description

La présente invention concerne une direction assistée hydraulique comportant montés pivotants coaxialement un arbre de commande pouvant être entraîné par le volant de direction et un arbre suiveur relié à une crémaillère de direction, des moyens élastiques à rigidité modulable reliant les deux arbres, des moyens pour moduler la rigidité desdits moyens élastiques, un distributeur comprenant un élément intérieur solidaire de l'un des arbres et un élément extérieur solidaire de l'autre arbre et propre à contrôler une circulation de fluide en fonction de la position angulaire relative des deux éléments, et un vérin d'assistance qui est relié au distributeur et propre à entraîner la crémaillère de direction.

Les directions assistées de ce genre permettent de moduler l'assistance en fonction d'un paramètre qui peut, par exemple, être la vitesse du véhicule, ce qui permet dans ce cas d'avoir une direction plus assistée en stationnement que sur route.

Des directions assistées du type défini ci-dessus sont connues des documents US-A-4 481 866 et FR-A-2 216 162. Mais dans ces deux dispositifs connus, les moyens élastiques sont constituées uniquement par une barre de torsion. Pour moduler l'assistance on agit sur cette barre, soit en faisant varier sa longueur utile (document US 4,481,866), soit en immobilisant plus ou moins une partie de cette barre (document FR-A- 2 216 162). Mais ces dispositions ont pour effet de modifier les caractéristiques de la barre de torsion ou de la fragiliser.

L'invention a pour but de réaliser une direction assistée comportant des moyens élastiques modulables mais dans laquelle la barre de torsion reste intacte.

A cette fin, la direction assistée selon l'invention comporte les caractéristiques définies dans la partie caractérisante de la revendication 1.

Dans un mode de réalisation de l'invention dans lequel les moyens élastiques reliant l'arbre de commande et l'arbre suiveur comprennent une barre de torsion coaxiale aux deux arbres, les moyens élastiques supplémentaires sont constitués par une série de rondelles-ressorts empilées entre une butée réglable et une bague solidaire en rotation de l'arbre de commande et il est prévu des moyens pour déplacer axialement cette bague en fonction du pivotement relatif de l'arbre de commande et de l'arbre suiveur.

On a décrit ci-après, à titre d'exemple non limitatif, un mode de réalisation de la direction assistée selon l'invention, avec référence au dessin annexé dans lequel :

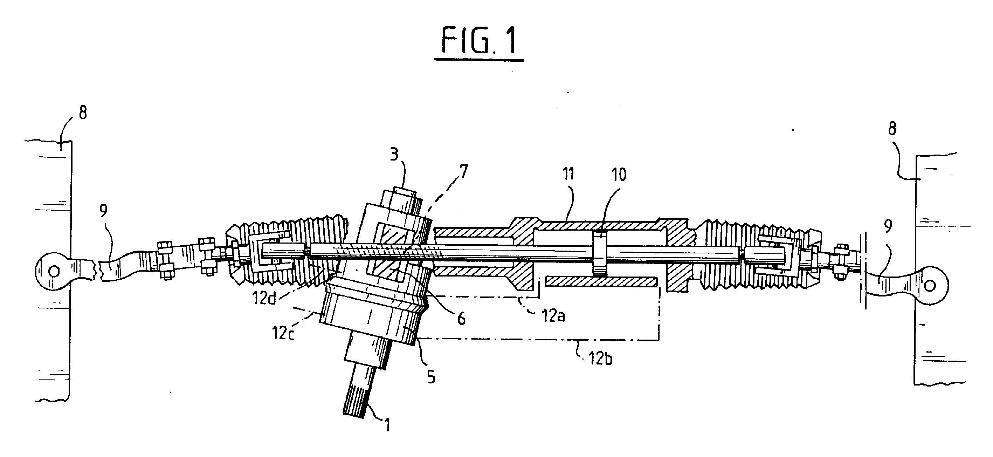

La Figure 1 est une vue schématique de l'ensemble de la direction;

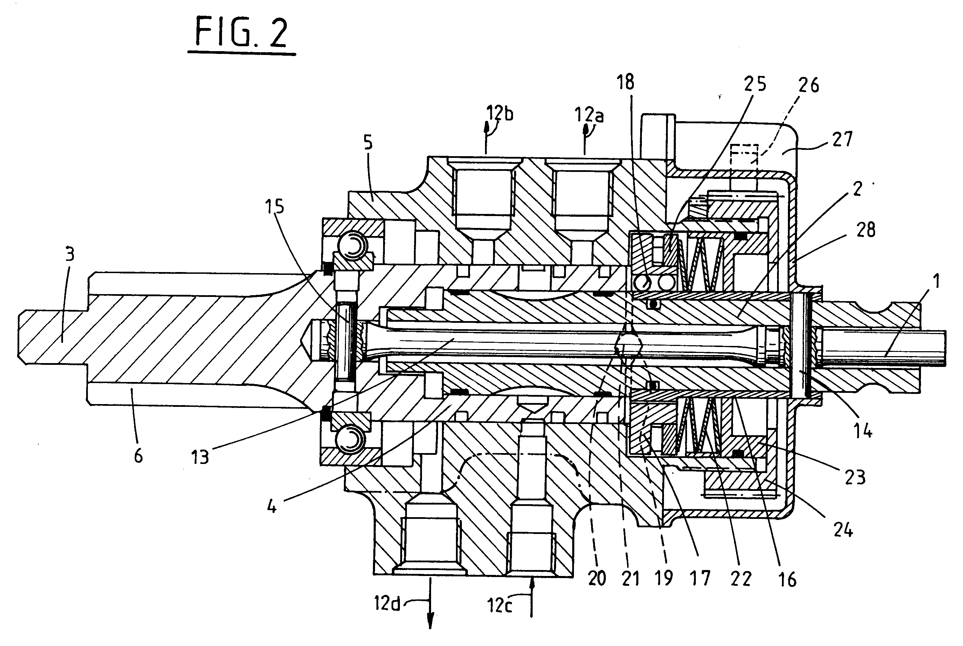

La Figure 2 est une vue en coupe du distributeur.

Telle qu'elle est représentée au dessin, la direction assistée selon l'invention comprend un arbre de commande 1 lié à la colonne de direction et solidaire de l'élément interne 2 d'un distributeur, un arbre suiveur 3 solidaire de l'élément externe 4 du distributeur, dans lequel on peut tourner l'élément interne 2 et qui est monté à rotation dans un boîtier 5. L'arbre suiveur 3 est monobloc avec un pignon 6 en prise avec la crémaillère de direction 7. Cette crémaillère est reliée de la manière usuelle aux roues directrices 8 par des timoneries 9. Elle fait corps avec la tige d'un piston 10 d'un vérin d'assistance à double effet 11. Les deux chambres de ce vérin sont reliées par des conduites 12a et 12b au distributeur 2-4-5 qui est par ailleurs relié par des conduites 12c et 12d à une source de haute pression et à un réservoir. Une barre de torsion 13 est liée, à l'une de ses extrémités, par une goupille 14 à l'élément distributeur interne 2 et, à son autre extrémité, par une goupille 15 à l'élément distributeur externe 4.

Un manchon 16 est lié à l'élément interne 2 du distributeur par la goupille 14. Une bague 17 est clavetée coulissante sur le manchon 16 par l'intermédiaire d'un guide à billes 18. Cette bague présente des rainures radiales à rampes 19, éventuellement deux rainures en V telles que représentées, sur sa face tournée du côté de l'élément externe 4 du distributeur. De son côté, la face de cet élément externe tournée du coté de la bague 17 présente deux rainures radiales à rampes 20. Une bille 21 est disposée dans chaque couple de rainures en vis-à-vis. Des rondelles à ressorts 22 sont disposées entre la bague 17 et une bague 23 maintenue par un écrou 24 vissé dans le boîtier 5. Une cage à aiguilles 25 est disposée entre les rondelles à ressort et la bague 17 de façon que cette bague puisse pivoter malgré l'effort exercé par les rondelles-ressorts.

L'écrou 24 est extérieurement denté et est relié par un train de pignons dont l'un est visible en 26 a un servo-moteur 27 asservi en position. L'ensemble est protégé par une capote 28.

Lorsque le conducteur tourne le volant de direction, l'effort qu'il exerce sur ce volant est transmis à l'arbre suiveur 3 par l'intermédiaire de la barre de torsion 13. Les deux éléments externe et interne du distributeur pivotent l'un par rapport à l'autre en fonction du couple exercé de sorte que le vérin d'assistance 11 est mis en service et entraîne la crémaillère de direction. En même temps, du fait du décalage angulaire entre l'élément externe 4 du distributeur et la bague 17 solidaire en rotation de l'élément interne 2 du distributeur, cette bague se déplace longitudinalement en écrasant les rondelles-ressorts 22. L'effort élastique supplémentaire de rappel dépend de la position de l'écrou 24 et est donc modulé par le servo-moteur 26.

## Revendications

1. Direction assistée hydraulique à assistance variable, comportant montés pivotants coaxialement un arbre de commande (1) pouvant être entraîné par le volant de direction et un arbre suiveur (3) relié à une crémaillère de direction (7), des moyens élastiques à rigidité modulable reliant les deux arbres (1 et 3), des moyens pour moduler la rigidité desdits moyens élastiques, un distributeur comprenant un élément intérieur (2) solidaire de l'un des arbres et un élément extérieur (4) solidaire de l'autre arbre et propre à contrôler une circulation de fluide en fonction de la position angulaire relative des deux éléments (2 et 4), et un vérin d'assistance (10) qui est relié au distributeur et propre à entraîner la crémaillère de direction (7),
caractérisée en ce que les moyens élastiques modulables sont constitués par une barre de torsion (13) et par des moyens élasques supplémentaires (22), et en ce que les moyens pour moduler la rigidité des moyens élastiques n'agissent que sur la rigidité des moyens élastiques supplémentaires.

2. Direction assistée selon la revendication1, caractérisée en ce que les moyens élastiques supplémentaires sont constitués par une série de rondelles-ressorts empilées entre une butée réglable (23) et une bague (17) solidaire en rotation de l'arbre de commande (1) et en ce qu'elle comporte des moyens pour déplacer axialement cette bague en fonction du pivotement relatif de l'arbre de commande (1) et de l'arbre suiveur (3).

3. Direction assistée selon la revendication 2, caractérisée en ce que la bague (17) présente des rainures radiales à rampes (19) sur sa face tournée vers l'élément externe (4) du distributeur, alors que la face de cet élément externe tournée vers la bague présente des rainures radiales à rampes (20) en vis-à-vis des rainures (19), une bille (21) étant disposée dans chaque couple de rainures en vis-à-vis.

4. Direction assistée selon l'une des revendications 2 ou 3,
caractérisée en ce que la butée réglable (23) prend appui sur un écrou (24) vissé dans un boîtier fixe (5), denté extérieurement et relié par un train de pignons à un servo-moteur électrique (27) asservi en position.

## Patentansprüche

1. Hydraulische Servolenkung mit variabler Lenkhilfe, mit einer koaxial angeordneten drehbaren Antriebswelle (1), die durch das Lenkrad angetrieben sein kann, und einer Nachführungswelle (3), welche mit einer Steuerzahnstange (7) verbunden ist, sowie elastischen Mitteln mit variierbarer Steifigkeit, welche die beiden Wellen (1 und 3) miteinander verbinden, Mitteln zum Variieren der Steifigkeit besagter elastischer Mittel, einem Verteiler, der ein fest mit einer der Wellen verbundenes Innenelement (2) aufweist sowie ein fest mit der anderen Welle verbundenes Außenelement (4), welches zum Steuern einer Flüssigkeitszirkulation in Abhängigkeit von der relativen Winkelposition der beiden Elemente (2 und 4) zueinander geeignet ist und einem Hilfszylinder (10), welcher mit dem Verteiler verbunden und zum Antrieb der Steuerzahnstange (7) geeignet ist,
dadurch gekennzeichnet, daß die variierbaren elastischen Mittel durch eine Drehstabfeder (13) und durch zusätzliche elastische Mittel (22) gebildet sind und daß die Mittel zum Variieren der Steifigkeit der elastischen Mittel nur auf die Steifigkeit der zusätzlichen elastischen Mittel einwirken

2. Servolenkung nach Anspruch 1,
dadurch gekennzeichnet, daß die zusätzlichen elastischen Mittel durch eine Serie von Federringen gebildet sind, welche zwischen einem verstellbaren Anschlag (23) und einem drehfest mit der Antriebswelle (1) verbundenen Ring (17) gestapelt sind und daß sie Mittel zur axialen Verschiebung dieses Ringes in Abhängigkeit von der relativen Verdrehung zwischen der Antriebswelle (1) und der Nachführungswelle (3) aufweist.

3. Servolenkung nach Anspruch 2,
dadurch gekennzeichnet, daß der Ring (17) an seiner dem Außenelement (4) des Verteilers zugewandten Stirnfläche radiale, mit Seitenrampen versehene Nuten (19) aufweist, während die dem Ring zugewandte Stirnfläche dieses Außenelements den Nuten (19) gegenüberliegende radiale mit Seitenrampen versehene Nuten (20) besitzt, wobei in jedem Paar der einander gegenüberliegenden Nuten eine Kugel (21) angeordnet ist.

4. Servolenkung nach Anspruch 2 oder 3,
dadurch gekennzeichnet, daß der verstellbare Anschlag (23) sich an einer in ein festes Gehäuse (5) eingeschraubten Schraubenmutter (24) abstützt, die an ihrer Außenseite gezahnt und über einen Zahnradblock mit einem elektrischen Servomotor (27) zur Regelung ihrer Position verbunden ist.

## Claims

1. Hydraulic variable power steering comprising one control shaft (1) able to be driven by the steering wheel and one tracking shaft (3) connected to a steering rack (7), both shafts being mounted pivoting coaxially, elastic means with modulable rigidity connecting the two shafts (1 and 3), one distributor including one internal element (2) integral with one of the shafts and one external element (4) integral with the other shaft and able to control a circulation of fluid according to the relative angular position of the two elements (2 and 4), and one booster jack (10) connected to the distributor and able to actuate the steering rack (7),

wherein the modulable elastic means are constituted by one torsion bar (13) and additional elastic means (22), and wherein the means to modulate the rigidity of the elastic means only acts on the rigidity of the additional elastic means.

2. Power steering according to claim 1, wherein the additional elastic means are constituted by a set of spring washers stacked between one adjustable stop (23) and one ring (17) rotary-integral with the control shaft (1) and wherein it comprises means to axially move this ring according to the relative pivoting of the control shaft (1) and that of the tracking shaft (3).

3. Power steering according to claim 2, wherein the ring (17) has radial cam grooves (19) on its face orientated towards the external element (4) of the distributor, whereas the face of this external element orientated towards the ring has radial cam grooves (20) opposite the grooves (19), a ball being disposed in each pair of opposing grooves.

4. Power steering according to claim 2 or 3, wherein the adjustable stop (23) takes support on a nut (24) screwed into a fixed box (5), externally toothed and connected by a gear shaft to an electric servomotor (27) in an automatic controlled position.

FIG.1

FIG. 2